Europäisches Patentamt

European Patent Office

Office européen des brevets

(11) Publication number: **0 069 437**
**B1**

(12) **EUROPEAN PATENT SPECIFICATION**

(45) Date of publication of patent specification: **05.02.86**

(21) Application number: **82301401.4**

(22) Date of filing: **18.03.82**

(51) Int. Cl.⁴: **G 06 K 13/067**

(54) Overlapped document detector.

(30) Priority: **06.07.81 US 280756**

(43) Date of publication of application:
**12.01.83 Bulletin 83/02**

(45) Publication of the grant of the patent:
**05.02.86 Bulletin 86/06**

(84) Designated Contracting States:
**DE FR GB**

(56) References cited:
**FR-A-2 073 150**
**US-A-2 992 822**
**US-A-3 278 754**

(73) Proprietor: **MAGNETIC PERIPHERALS INC.**
**8100-34th Avenue South**
**Minneapolis Minnesota 55440 (US)**

(72) Inventor: **Milanes, Eddy Juan**
**5804 Northwest 65th Street**
**Oklahoma Oklahoma 73132 (US)**
Inventor: **Highbridge, Russel Edwin**
**5945 Seminole Road**
**Oklahoma Oklahoma 73132 (US)**
Inventor: **Morgan, Robert Steve**
**704 Victoria Drive**
**Yukon Oklahoma 83099 (US)**

(74) Representative: **Caro, William Egerton et al**
**J. MILLER & CO. Lincoln House 296-302 High**
**Holborn**
**London WC1V 7JH (GB)**

Courier Press, Leamington Spa, England.

## Description

This invention relates to overlapped document detectors, and particularly, although not so restricted, to apparatus for separation and detection of overlapped documents in a document handling machine.

Document handling equipment is useful in conjunction with data processing equipment for reading and sorting documents such as bank cheques, deposit slips, bills, stubs, etc. In typical document handling equipment, the documents to be read and sorted are placed in an input hopper and are individually fed from the hopper along a document path. The documents are accelerated to a nominal running speed thereby to produce a gap between successive documents, and information contained on the documents is read. For example, such information could be in the form of magnetic encoded data, magnetic ink characters, optical characters, punched holes, etc. The document handling equipment ordinarily includes a plurality of sorting pockets which are selectively actuated in accordance with the information read from the document. Therefore, the documents are sorted into different pockets in accordance with the information on the documents. Occasionally, however, documents are fed in a partial or complete overlapped condition thereby resulting in errors in the reading of the document and improper sorting.

In the past, several techniques have been utilised for detecting overlapped documents in document handling equipment. One technique, for example, requires documents of a specified size. Gauging apparatus measures the size of each document before being read, but if two or more documents are partially overlapped the gauging apparatus senses an apparent oversize and rejects the document. The problem with this technique is, that it cannot be used with documents of differing sizes. Also, the gauging apparatus cannot sense two documents that are completely overlapped, since there is no apparent oversize.

Another technique requires the use of documents of the same transmissive optical density. Light transmitted through the documents is compared against a standard so that if a significant change in the transmitted light through successive documents occurs, the document handling machine assumes that two or more documents are overlapped. One difficulty with this technique is that the document handling machine cannot reliably handle documents having large differences in transmissive optical densities.

In the banking industry, it is typical to find documents having lengths between 12 to 22 cm (4.75 to 8.75 inch), thicknesses of between 0.06 to 0.23 mm (2.5 to 9 mils), and optical transmissive density variations as large as 32 to 1. Consequently, to serve adequately the needs of the banking industry, among others, a need exists for a document handling machine capable of detecting the presence of partial and completely overlapped documents regardless of differences of length, thickness, optical transmissiveness, etc. among the documents.

Another technique for separating and detecting overlapped documents employs the use of an air knife or jet to separate the leading edges of overlapped documents to cause the documents to flow along two respective paths. Vacuum sensors in the wall of the document handling machine included ports which are closed by the documents as they passed by the ports. Thus, if two or more documents are overlapped, the air jet separates the documents and the ports of both document paths are closed simultaneously thereby indicating the presence of overlapped documents. One of the problems associated with this technique resides in the fact that to sense adequately the document, it must adequately close the port in the wall of the document handling machine. However, to prevent impeding the movement of the document, a vacuum is not so strong as to hold the document against the wall. Thus, it is necessary to adjust the vacuum strength between one strong enough to detect the presence of the document yet weak enough so as not to impede movement of the document. In practice, however, the ability to close the ports had to be sacrificed in favour of movement of the document, or vice versa. Thus, it is difficult to maintain adequately the vacuum so as to provide adequate detection of the document without impeding its movement. Furthermore, this technique requires the document to travel past the ports at a substantially uniform distance therefrom. However, this is not altogether realisable with documents of varying thicknesses and densities. Consequently, the technique is not altogether suitable for detecting overlapped documents in a document handling machine capable of handling differing sizes and weights of documents.

U.S. Specification No. 3,278,754 discloses an overlapped document detector for detecting documents in each of two paths along which the documents may travel comprising first detector means for detecting radiation reflected from the document in a first of said paths, second detector means for detecting radiation reflected from a document in a second of said paths, and responsive means responsive to simultaneous operations of said first and second detector means for indicating an overlapped document condition.

The present invention seeks to provide an overlapped document detector for a document handling machine wherein overlapped documents are separated and detected without relying on any characteristic of the document itself, such as size, weight, density, optical transmissivity, optical reflectivity, etc.

Thus the present invention provides an overlapped document detector of the type referred to above, in which said first detector means comprises first and fourth sensor means focused to receive radiation reflected from opposite sides of a document in said first path, said second detector means comprises third and second sensor means focused to receive radiation from opposite sides of a document in said second path, the first sensor means being so arranged adjacent said second path as to receive radiation reflected from a document in said first path only when no document is present in said second path, and the third sensor means being so arranged adjacent said first path as to receive radiation reflected from a document in said second path only when no document is present in said first path and in that said responsive means comprises first gate preparation means responsive to said first and second sensor means for providing a first gate signal, second gate preparation means responsive to said third and fourth sensor means for providing a second gate signal, and gate means responsive to said first and second gate signals for providing a signal indicative of an overlapped document condition.

The invention is illustrated, merely by way of example, in the accompanying drawings, in which:—

Figures 1 is a schematic representation of a portion of a document handling machine having an overlapped document detector according to the present invention;

Figure 2 is a sectional view of the overlapped document detector of Figure 1;

Figure 3 is a sectional view taken along line 3—3 in Figure 2 showing optical sensors for detecting a document in one path;

Figure 4 is a voltage diagram useful in explaining operation of the optical sensors of Figure 3;

Figure 5 is a block circuit diagram of apparatus for processing signals from the optical sensors of Figure 3; and

Figure 6 shows waveforms of signals at various points in the circuit of Figure 5.

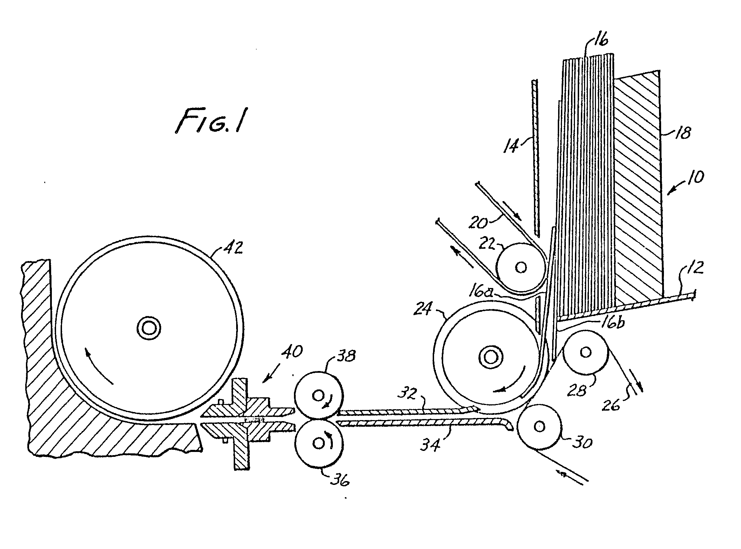

With reference to the drawings, and particularly to Figure 1, there is illustrated a document handling machine having an overlapped document detector 40 according to the present invention. The document handling machine includes an input hopper 10 having a lower trough 12 and an end wall 14. Documents 16 are stacked in the hopper 10 so that an edge is supported by the trough 12 and a weight 18 urges the documents 16 towards the wall 14. A picker belt 20 is entrained around a pulley 22 to engage the forwardmost document 16a to forward the same to separator tyre or roller 24. A counter-rotating reverse belt 26 is entrained around pulleys 28, 30 to impede movement of the next following document 16b. The operation of the input hopper, picker belt, separator roller, and reverse belt is such as to pick off the documents in the hopper 10 one at a time and forward them to a document path defined between plates 32, 34. The reverse belt 26, which rotates around the pulleys 28, 30 in the direction of the arrows shown, serves to inhibit the next following document from travelling along the document path until the first document has cleared the separator roller 24.

The documents travelling along the document path are then accelerated by intermediate accelerator drive rollers 36, 38. The function of the intermediate accelerated drive rollers is to accelerate the documents to an intermediate speed thereby to create a gap between successive documents. The documents are thereafter forwarded to the overlapped document detector 40, and thereafter to a final accelerator roller 42 which accelerates the documents to a final transport speed. Thereafter, the documents may be read and sorted in conventional manner.

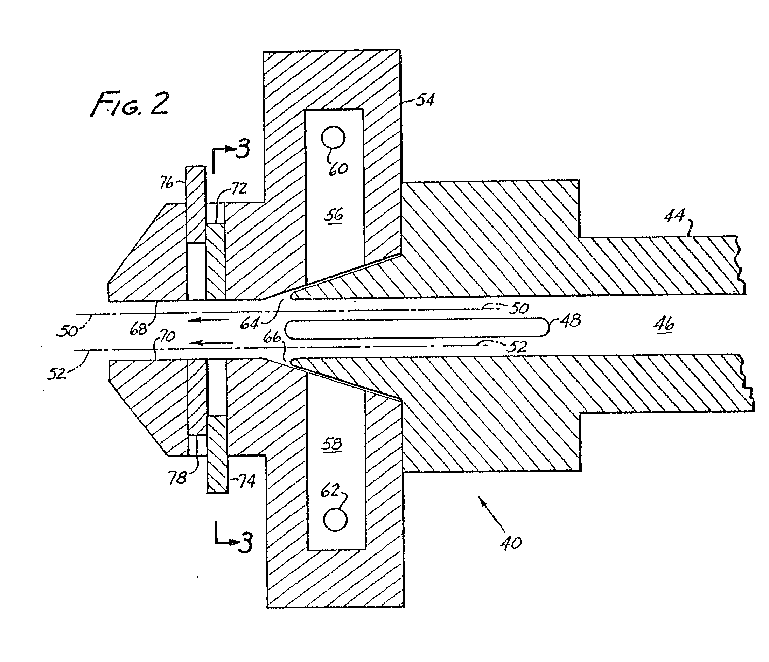

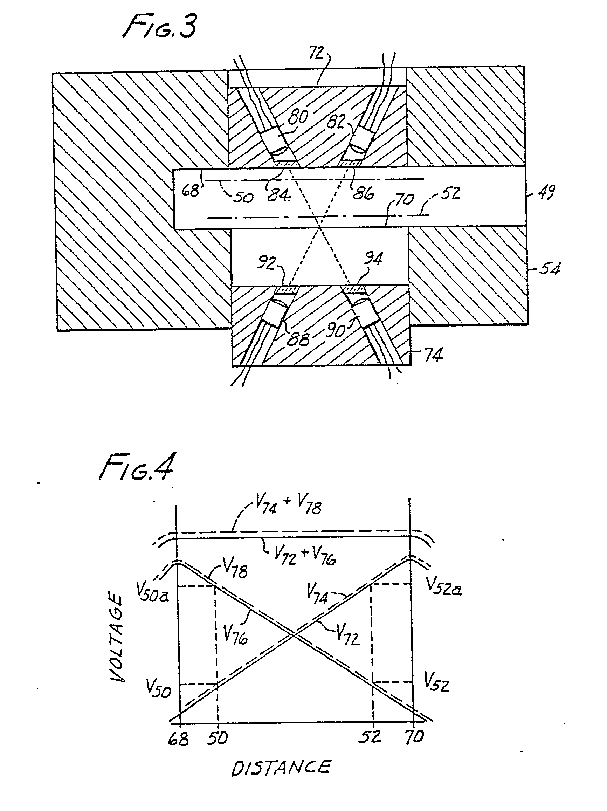

As shown in Figure 2, the overlapped document detector 40 includes a housing 44 which forms a document path 46 to receive documents from the intermediate accelerator drive rollers 36, 38. An air knife is disposed in the path 46 so that documents in the path 46 must follow either of two nominal document paths defined between a nominal plane 50 and a surface 68 and between a nominal plane 52 and a surface 70. The air knife comprises an inlet port 48 through which air under pressure is admitted in a direction perpendicular to the direction of document travel to separate overlapped documents in the path 46. An exit port 49 (Figure 3) is positioned opposite the port 48 to permit exhaust of air admitted through the port 48. The port 49 preferably extends the full length of the housing 44 and a housing 54 to permit exhaust of air from the air knife, and to permit access to the document path to remove documents. The housing 54 is fastened to the housing 44 and includes chambers 56, 58 and air inlet ports 60, 62. Air jets 64, 66 are formed between the housings 44, 54 so as to permit air to escape at high velocity from the chambers 56, 58 into the region of the nominal document paths.

Air is admitted under pressure through the ports 60, 62 to the chambers 56, 58 and allowed to escape through air jets 64, 66. Since the air escapes at a relatively high velocity, the pressure of that air is relatively low, and below atmospheric pressure. When a document is in either of the nominal document paths, the low pressure air from the air jets forms a partial vacuum between the document and the respective walls 68 or 70. Thus, the document is maintained in the region between the respective surface 68 or 70 of the nominal document path. At the same time, the air jets form a decrease in air pressure along the document paths upstream toward the forward end of the air knife. This decreased pressure in the nominal paths, coupled with air blow perpendicular to the direction of document travel by the air knife, serves to separate the leading edges of overlapped documents causing two or more documents to be separated into the nominal document paths. Therefore, if two overlapped documents are travelling in the path 46, air directed by the air knife through the port 48 will cause the leading edges of the documents to separate, and the documents will be directed to follow the respective nominal document paths. As the documents pass the air jets 64, 66, they are pulled by the vacuum formed by those air jets to continue along their respective paths. Downstream of the air jets 64, 66 are a plurality of sensors 72, 74, 76, 78.

Figure 3 is a sectional view taken along line 3—3 in Figure 2 showing two of the four optical sensors 72, 74 for detecting documents in the nominal document paths. It will be appreciated that the sensors 76, 78 are essentially identical to the sensors 74, 76. The sensor 72 comprises a light emitting diode 80 and a phototransistor 82 arranged to focus on a spot on the plane of the surface 70. Dust shields 84, 86 serve to protect the diode 80 and the sensor 82 from paper dust and other contaminants in the document path. Similarly, a light emitting diode 90 and a phototransistor 88 of the sensor 74 are arranged to focus on a spot on the plane of the surface 70. Dust shields 92, 94 protect the diode 88 and sensor 90 respectively from dust and other contaminants.

Similarly, the sensors 76, 78 each have a light emitting diode and a phototransistor sensor, focused on a spot on the plane of the surface 68. Therefore, each nominal document path has two sensors, each focused on the plane of the respective surface forming one of the boundaries of the nominal document path; each sensor being directed at the focal plane from opposite sides thereof. It should be noted that while the sensor assemblies are focused on the plane of the surfaces 68, 70, in reality there is no physical surface present at the spot of focus. Also, while light infrared detectors and emitters are preferred, visible light and other radiant detectors and emitters may be used.

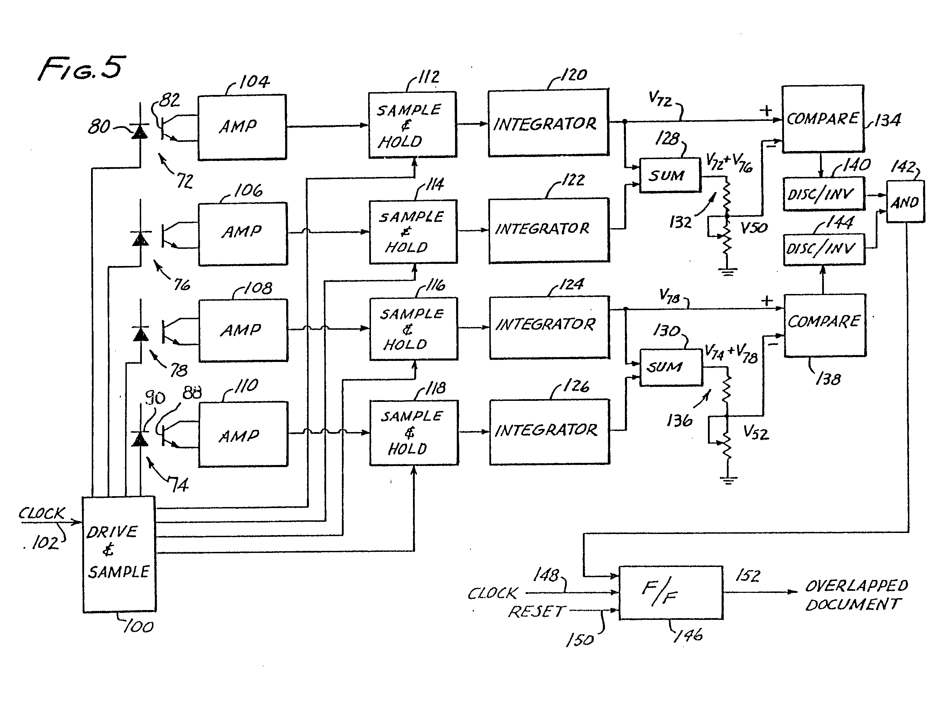

With reference to Figures 3 and 4, assume a document is present along the nominal document path between the surface 70 and the nominal plane 52 in the region of the sensors 72, 74. Light from the diodes 80, 90 of the sensors is reflected off the surfaces of the document causing the associated phototransistors 82, 88 to generate a current representative of the amount of light so reflected. If the document were at the surface 70, a voltage $V_{72}$ across a resistor in parallel with the sensor 72 would be at a maximum, and a voltage $V_{74}$ across a resistor in parallel with the phototransistor of the sensor 74 would be at a maximum. Also, with a document at the surface 70 (and no document at or near the surface 68), a voltage $V_{76}$ associated with the sensor 76 and a voltage $V_{78}$ associated with the sensor 78 would be at a minimum. Conversely, if the document was in the nominal document path between the nominal plane 50 and the surface 68, the voltages $V_{76}$, $V_{78}$ would be at a maximum whereas the voltages $V_{72}$, $V_{74}$ would be at a minimum. It will be appreciated that the voltages $V_{72}$, $V_{74}$ follow essentially the same waveform, with a peak at the surface 70, whereas the voltages $V_{76}$, $V_{78}$ are essentially identical, with a peak at the surface 68. Therefore, as shown in Figure 4, the sums of the voltages $V_{72} + V_{76}$ and $V_{74} + V_{78}$ remain relatively constant regardless of the position of the document between the surfaces 68, 70.

While the explanation given above in connection with Figure 4 concerns detection of a document in the nominal document path between the nominal plane 52 and the surface 70, a similar result occurs in connection with sensors 76, 78 in sensing a document between the nominal plane 50 and the surface 68.

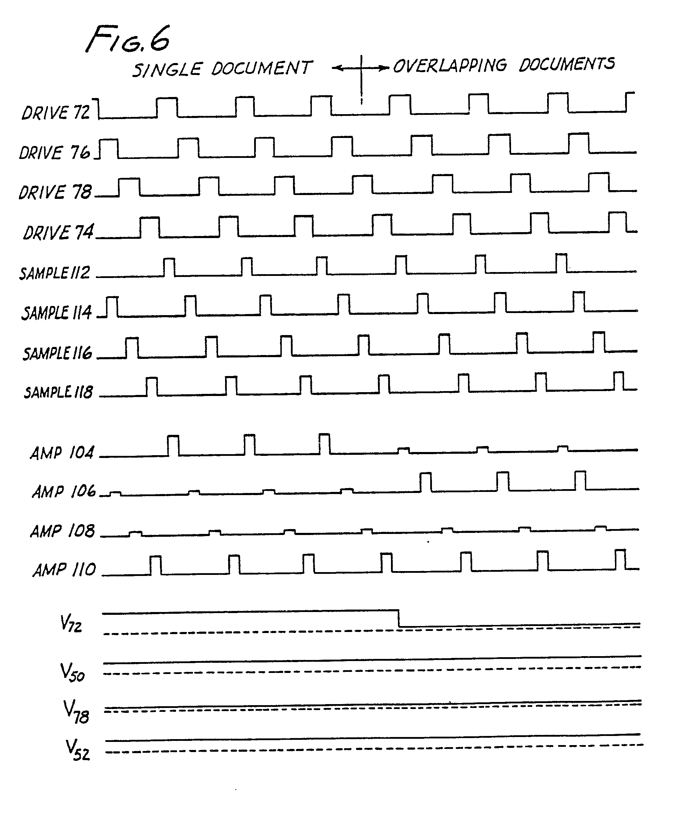

Figure 5 is a block circuit diagram of apparatus for processing signals from the sensors 72, 74, 76, 78. A four-phase sampling drive clock circuit 100 is driven by a clock signal *via* an input 102 to provide drive signals to the diodes 80, 90 etc. of the sensors 72, 74, 76, 78. Phototransistors 82, 88 etc. of the sensors provide voltage signal inputs to respective amplifiers 104, 106, 108, 110; the phototransistor of the sensor 72 providing an input to the amplifier 104, the phototransistor of the sensor 76 providing an input to the amplifier 106, the phototransistor of the sensor 78 providing an input to the amplifier 108 and the phototransistor of the sensor 74 providing an input to the amplifier 110. The amplifiers 104, 106, 108, 110 provide inputs to sample and hold circuits 112, 114, 116, 118, respectively. Sample rate signals are provided to each of the sample and hold circuits *via* the four-phase sample and drive clock circuit 100. The outputs from the sample and hold circuits 112, 114, 116, 118 are provided to integrator circuits 120, 122, 124, 126, the outputs of the integrators 120, 122 providing inputs to a summing circuit 128 and the outputs of the integrator circuits 124, 126 providing inputs to a summing circuit 130. The summing circuit 128 adds the signal inputs from integrators 120, 122 and provides an output through a voltage divider 132 to the negative input of a compare circuit 134. The summing circuit 130 adds the signals from the integrators 124, 126 and provides an output through a voltage divider 136 to the negative input of a compare circuit 138. The positive input of the compare circuit 134 is provided directly from the integrator 120, and the positive input to the compare circuit 138 is provided directly by the output of the integrator 124. The compare circuit 134 provides an input to a discriminator-inverter 140 which in turn provides a first input to an AND gate 142, whereas the output of the compare circuit 138 provides an input to a discriminator-inverter 144 to provide a second input to the AND gate 142. The output of the AND gate 142 is fed to the set input of a flip-flop 146. The flip-flop 146 also has a clock input 148 and a reset input 150, and an output 152 which provides a signal indicative of an overlapped document condition.

The operation of the circuit illustrated in Figure 5 will now be explained with reference to Figure 6. As shown in Figure 6 the drive and sample circuit 100 provides non-overlapping drive pulses to each of the sensors, the drive pulses for each sensor being shown as "drive 72", "drive 76", "drive 78" and "drive 74", respectively. The drive and sample circuit 100 also provides sample pulses, coincident with the corresponding drive pulses for each of the respective sample and hold circuits 112, 114, 116, 118.

Assume initially that a document appears in the nominal document path between the surface 70 and the nominal plane 52, but that no document appears in the other nominal document path between the surface 68 and the nominal plane 50. Consequently, when the respective light emitting diodes are driven by the drive pulses from the drive and sample circuit 100, a relatively high amount of light is reflected onto the diodes of sensors 72, 74, but relatively very little light is reflected onto the diodes of the sensors 76, 78. Hence, and with reference to Figure 4, the voltages $V_{72}$, $V_{74}$ will be relatively high, whereas the voltages $V_{76}$, $V_{78}$ will be relatively low. However, the sums of the voltages $V_{72} + V_{76}$ and $V_{74} + V_{78}$ will be relatively high. This is shown in Figure 6 by relatively high signals at the outputs of amplifiers 104, 110 and relatively low signals at the outputs of amplifiers 106, 108. Thus, the sample and hold circuits 112, 114, 116, 118 sample the signals from the amplifiers 104, 106, 108, 110, and integrators 120, 122, 124, 126 integrate the signals to provide signals indicative of the voltage level of the signals $V_{72}$, $V_{76}$, $V_{78}$, $V_{74}$, respectively, at the position of the document.

With a document in the nominal document path between the surface 70 and the plane 52 (and no document in the nominal document path between the surface 68 and the plane 50), the sum of the voltages $V_{72} + V_{76}$ and $V_{74} + V_{78}$ will be relatively high (due to the high values of the voltages $V_{72}$ and $V_{74}$) so when divided by the voltage dividers 132, 136, voltage signals $V_{52}$, $V_{50}$ are derived representative of the voltage of the signal $V_{78}$ at the nominal plane 52 and the voltage of the signal $V_{72}$ at the nominal plane 50. However, as shown in Figure 6, the voltage $V_{78}$ is substantially smaller than the voltage $V_{52}$ (indicative that the document is in the nominal document path between the surface 70 and the nominal plane 52), and the voltage $V_{72}$ is substantially greater than the voltage $V_{50}$ (indicative that the document is outside the nominal document path between the surface 68 and the nominal plane 50). Since the voltage $V_{78}$ from the integrator 124 is relatively low compared to the output of the voltage divider 136, the compare circuit 138 produces a logical zero signal due to the larger voltage $V_{52}$ at the negative input of the compare circuit 138. The discriminator-inverter 144 discriminates that signal through a time delay, inverts its, and provides a logical one signal to the AND gate 142 indicative of the presence of a document between the surface 70 and the nominal plane 52. Also, since the voltage $V_{72}$ of the integrator 120 is greater than the voltage $V_{50}$, the compare circuit 134 produces a logical one output to the discriminator-inverter 140, so a logical zero signal is provided to the other input of the AND gate 142. Consequently, the AND gate is not operated to set the flip-flop 146.

At a later time (as shown in the right-hand portion of Figure 6), a document in the nominal document path between the surface 68 and the nominal plane 50 is detected. Since a document adjacent the surface 68 will effectively block light from being focused by the sensor 72 on the document adjacent the surface 70, and since the document adjacent the surface 70 will effectively block light from being focused by the sensor 78 on the document adjacent the surface 68, the signals from the amplifiers 104, 108 will both be relatively low. However, the sensors 74, 76 will produce relatively high signals so the signals from the amplifiers 106, 110 will be relatively high. As a result, the voltages $V_{50}$, $V_{52}$ remain essentially unchanged, but the value of the voltage $V_{72}$ is substantially smaller than the voltage $V_{50}$. As a result, with the voltage $V_{72}$ smaller than the voltage $V_{50}$ (indicative of a document in the nominal document path between the surface 68 and the nominal plane 50), a logical zero output is produced by the compare circuit 134. Also, with the voltage $V_{78}$ smaller than the voltage $V_{52}$ (indicative of a document in the nominal document path between the surface 70 and the nominal plane 52), a logical zero output is produced by the compare circuit 138. Consequently, logical one signals are impressed on both inputs of the AND gate 142 to thereby operate the AND gate.

With the AND gate 142 operated, the flip-flop 146 is operated to a set condition to provide a signal on the output 152 indicative of an overlapped document condition. The signal on the output 152 may, for example, stop the feeding of documents into the document handling machine and operate the pocket gates (not shown) downstream of the reader to cause the overlapped documents to be rejected.

As described above, the principal sensors, against which the threshold signals are compared, are the sensors 72, 78. However, if desired, the principal sensors may be the sensors 74, 76 (in which case the sensors 72, 76 and the sensors 74, 78 are reversed in Figure 5) and the threshold voltages should be adjusted to $V_{50a}$ and $V_{52a}$ in Figure 4.

If a document appears in the region between the nominal planes 50, 52, it will still be detected, and no false indication will occur. Thus, the voltages $V_{72}$, $V_{78}$ will, under such circumstances, be greater than the respective threshold signals provided by the voltages $V_{50}$, $V_{52}$ to set both the compare circuits 134, 138 at logical ones, thereby providing logical zeros to both inputs of the AND gate 142.

The four-phase drive clock circuit 100 effective drives each sensor at a separate time, thereby precluding interference between the sensors.

As described above, the output of the compare circuits 134, 138 are provided to the discriminator-inverters 140, 144. One feature of the discriminator function is to provide a short time delay to be certain that each document detection remains in the respective detection zones for a predetermined time period before generating a negative signal for the inverter portion of the circuit. This ensures that the compare signal output be low for some predetermined period of time so as to discriminate against folds and wrinkles in a document that may actually encroach into the other nominal document path. For example, a folded document passing between the surface 70 and the plane 52 might, for an instant, also be detected by the sensor of the path between the surface 68 and the plane 50. The discriminator-inverter circuits assure that a false overlapped document indication will not be indicated simply because a document is folded or wrinkled.

It will be appreciated that document detection is accomplished without regard to the colour of a document. Thus, documents whose colour reduces reflectivity of light are nonetheless detected as easily as documents whose colour provides a high reflectivity of light. In this respect, documents with lower reflectivity characteristics will produce voltage waveforms as shown in Figure 4, but with lower amplitudes. Document detection, being accomplished by detection of the relative values of reflections with respect to equally reduced sums, is therefore independent of the reflective properties of the documents.

It will also be appreciated that document thickness is not material to document detection. A false document detection will not be accomplished on any document having a side lying between the nominal planes 50, 52. This is true because the system can detect documents in that region, and because the mechanical separatives of the nominal planes 50, 52 is greater than the thickness of a document.

The overlapped document detector according to the present invention and described above is reliable and rugged in use. Overlapped documents are detected and a mere wrinkled or folded document and a true overlapped condition are discriminated.

**Claims**

1. An overlapped document detector for detecting documents in each of two paths (50, 68; 52, 70) along which the documents may travel comprising first detector means (72, 74) for detecting radiation reflected from a document in a first of said paths (52, 70), second detector means (78, 76) for detecting radiation reflected from a document in a second of said paths (50, 68), and responsive means (Figure 5) responsive to simultaneous operation of said first and second detector means (72, 74; 78, 76) for indicating an overlapped document condition, characterised in that said first detector means comprises first and fourth sensor means (72, 74) focused to receive radiation reflected from opposite sides of a document in said first path (52, 70), said second detector means comprises third and second sensor means (78, 76) focused to receive radiation from opposite sides of a document in said second path (50, 68), the first sensor means (72) being so arranged adjacent said second path (50, 68) as to receive radiation reflected from a document in said first path (52, 70) only when no document is present in said second path (50, 68), and the third sensor means (78) being so arranged adjacent said first path (52, 70) as to receive radiation reflected from a document in said second path (50, 68) only when no document is present in said first path (52, 70), and in that said responsive means comprises first gate preparation means (128, 132, 134, 140) responsive to said first and second sensor means (72, 76) for providing a first gate signal, second gate preparation means (130, 136, 138, 144) responsive to said third and fourth sensor means (78, 74) for providing a second gate signal, and gate means (142) responsive to said first and second gate signals for providing a signal indicative of an overlapped document condition.

2. Detector as claimed in claim 1, characterised in that said first gate preparation means (128, 132, 134, 140) comprises first summing means (128) for summing the signals provided by said first and second sensor means (72, 76), and first divider means (132) for dividing the signal summed by said first summing means (128), said first divider means (132), in operation, providing a signal indicative of a first threshold level, said second gate preparation means (130, 136, 138, 144) comprising second summing means (130) for summing the signals provided by said third and fourth sensor means (78, 74), and second divider means (136) for dividing the signal summed by said second summing means (130), said second divider means (136), in operation, providing a signal indicative of a second threshold level.

3. Detector as claimed in claim 1 or 2 characterised in that said first and second gate preparation means each further include time delay means (140, 144) for delaying the producing of the respective first and second gate signals.

4. Detector as claimed in any preceding claim characterised by including sensor drive means (100) for operating each of said sensor means (72, 76, 78, 74) at mutually exclusive times and means (112, 114, 116, 118) for sampling and holding the signals produced by the respective sensor means.

5. Detector as claimed in claim 1 characterised in that said first and second gate signals are indicative of a first and second threshold level respectively, there being provided first output means (134) responsive to said first sensor means (72) and said first gate preparation means (128, 132) for indicating the presence of a document in said first path (52, 70) when the signal produced by said first sensor means (72) is no greater than said first threshold signal and second output means (138) responsive to said third sensor means (78) and said second gate preparation means (130, 136) for indicating the presence of a document in said second path (50, 68) when the signal produced by said third sensor means (78) is no greater than said second threshold signal

6. Detector as claimed in claim 5 characterised in that said first gate preparation means (128, 132) comprises first summing means (128) responsive to said first and second sensor means (72, 76) for summing the signals produced by said first and second sensor means (72, 76), and first divider means (132) for dividing the signal provided by said first summing means (128) to a predetermined fraction, and said second gate preparation means (130, 136) comprises second summing means (130) responsive to said third and fourth sensor means (78, 74) for summing the signals produced by said third and fourth sensor means (78, 74), and second divider means (136) for dividing the signal provided by said second summing means (130) to a predetermined fraction.

**Revendications**

1. Détecteur de documents chevauchants destiné à détecter des documents dans chacun de deux chemins (50, 68; 52, 70) le long desquels les documents peuvent se déplacer, comprenant un premier détecteur (72, 74) pour détecteur un rayonnement réfléchi par un document dans un premier des chemins (52, 70), un second détecteur (78, 76) pour détecter un rayonnement réfléchi par un document dans un second des chemins (50, 68), et un moyen sensible (Figure 5) qui est sensible au fonctionnement simultané des premier et second détecteurs (72, 74; 78, 76) pour indiquer un état de chevauchement de documents, caractérisé en ce que le premier détecteur comprend des premier et quatrième capteurs (72, 74) mis au point pour recevoir un rayonnement réfléchi par des côtés opposés d'un document se trouvant dans le premier chemin (52, 70), le second détecteur comprend des troisième et deuxième capteurs (78, 76) mis au point pour recevoir un rayonnement de côtés opposés d'un document se trouvant dans le second chemin (50, 68), le premier capteur (72) étant disposé au voisinage du second chemin (50, 68) de manière à ne recevoir un rayonnement réfléchi par un document se trouvant dans le premier chemin (52, 70) que lorsqu'aucun document n'est présent dans le second chemin (50, 68), et le troisième capteur (78) étant disposé au voisinage du premier chemin (52, 70) de manière à ne recevoir un rayonnement réfléchi par un document se trouvant dans le second chemin (50, 68) que lorsqu'aucun document n'est présent dans le premier chemin (52, 70), et en ce que le moyen sensible comprend un premier moyen de préparation de porte (128, 132, 134, 140) sensible aux premier et deuxième capteurs (72, 76) pour fournir un premier signal de porte, un second moyen de préparation de porte (130, 136, 138, 144) sensible aux troisième et quatrième capteurs (78, 74) pour fournir un second signal de porte, et une porte (142) sensible aux premier et second signaux de porte pour fournir un signal indiquant un état de chevauchement de documents.

2. Détecteur selon la revendication 1, caractérisé en ce que le premier moyen de préparation de porte (128, 132, 134, 140) comprend un premier moyen d'addition (128) pour additionner les signaux fournis par les premier et second capteurs (72, 76), et un premier diviseur (132) pour diviser le signal additionné par le premier moyen d'addition (128), le premier diviseur (132) fournissant, en fonctionnement, un signal indiquant un premier niveau de seuil, le second moyen de préparation de porte (130, 136, 138, 144) comprenant un second moyen d'addition (130) pour additionner les signaux fournis par les troisième et quatrième capteurs (78, 74), et un second diviseur (136) pour diviser le signal additionné par le second moyen d'addition (130), le second diviseur (136) fournissant, en fonctionnement, un signal indiquant un second niveau de seuil.

3. Détecteur selon l'une quelconque des revendications 1 et 2, caractérisé en ce que les premier et second moyens de préparation de porte comprennent en outre chacun un moyen à retard (140, 144) pour retarder la production des premier et second signaux de porte respectifs.

4. Détecteur selon l'une quelconque des revendications 1 à 3, caractérisé en ce qu'il comprend un moyen de commande de capteur (100) pour faire fonctionner chacun des capteurs (72, 76, 78, 74) à des temps exclusifs entre eux et des moyens (112, 114, 116, 118) pour échantillonner et maintenir les signaux produits par les capteurs respectifs.

5. Détecteur selon la revendication 1, caractérisé en ce que les premier et second signaux de porte indiquent respectivement un premier et un second niveau de seuil, en ce qu'il est prévu un premier moyen de sortie (134) sensible au premier capteur (72) et au premier moyen de préparation de porte (128, 132) pour indiquer la présence d'un document dans le premier chemin (52, 70) quand le signal produit par le premier capteur (72) n'est pas supérieur au premier signal de seuil et un second moyen de sortie (138) sensible au troisième capteur (78) et au second moyen de préparation de porte (130, 136) pour indiquer la présence d'un document dans le second chemin (50, 68) quand le signal produit par le troisième capteur (78) n'est pas supérieur au second signal de seuil.

6. Détecteur selon la revendication 5, caractérisé en ce que le premier moyen de préparation de porte (128, 132) comprend un premier moyen d'addition (128) sensible aux premier et second capteurs (72, 76) pour additionner les signaux produits par les premier et second capteurs (72, 76), et un premier diviseur (132) pour diviser le signal fourni par le premier moyen d'addition (128) en une fraction prédéterminée, et en ce que le second moyen de préparation de porte (130, 136) comprend un second moyen d'addition (130) sensible aux troisième et quatrième capteurs (78, 74) pour additionner les signaux produits par les troisième et quatrième capteurs (78, 74), et un second diviseur (136) pour diviser le signal fourni par le second moyen d'addition (130) en une fraction prédéterminée.

**Patentansprüche**

1. Detektor für überlappte Dokumente zur Feststellung von Dokumenten in jeder von zwei Bahnen (50, 68; 52, 70), auf denen sich die Dokumente bewegen können, mit ersten Detektoreinrichtungen (72, 74) zur Feststellung von Strahlung, die von einem Dokument auf einer ersten der Bahnen (52, 70) reflektiert wird, mit zweiten Detektoreinrichtungen (78, 76) zur Feststellung von Strahlung, die von einem Dokument auf einer zweiten der Bahnen (50, 68) reflektiert wird, und mit Ansprecheinrichtungen (Fig. 5), die auf die gleichzeitige Betätigung der ersten und zweiten Detektoreinrichtungen (72, 74; 78, 76) ansprechen, um einen Zustand mit überlappten Dokumenten anzuzeigen, dadurch gekennzeichnet, daß die ersten Detektoreinrichtungen erste und vierte Meßfühlereinrichtungen (72, 74) aufweisen, die so fokusiert sind, daß sie die von den gegenüberliegenden Seiten eines Dokumentes auf der ersten Bahn (52, 70) reflektierte Strahlung empfangen, daß die zweiten Detektoreinrichtungen dritte und zweite Meßfühlereinrichtungen (78, 76) aufweisen, die so fokusiert sind, daß sie Strahlung von den gegenüberliegenden Seiten eines Dokumentes auf der zweiten Bahn (50, 68) empfangen, daß die ersten Meßfühlereinrichtungen (72) so benachbart zu der zweiten Bahn (50, 68) angeordnet sind, daß sie von einem Dokument auf der ersten Bahn (52, 70) reflektierte Strahlung nur dann empfangen, wenn kein Dokument auf der zweiten Bahn (50, 68) vorhanden ist, während die dritten Meßfühlereinrichtungen (78) so benachbart zu der ersten Bahn (52, 70) angeordnet sind, daß sie von einem Dokument auf der zweiten Bahn (50, 68) reflektierte Strahlung nur dann empfangen, wenn kein Dokument auf der ersten Bahn (52, 70) vorhanden ist, und daß die Ansprecheinrichtungen erste Gatteraufbereitungseinrichtungen (128, 132, 134, 140), die auf die ersten und zweiten Meßfühlereinrichtungen (72, 76) ansprechen, um ein erstes Gattersignal zu liefern, zweite Gatteraufbereitungseinrichtungen (130, 136, 138, 144), die auf die dritten und vierten Meßfühlereinrichtungen (78, 74) ansprechen, um ein zweites Gattersignal zu liefern, und Gattereinrichtungen (142) aufweisen, die auf die ersten und zweiten Gattersignale ansprechen und ein Signal liefern, das einen Zustand mit überlappten Dokumenten anzeigt.

2. Detektor nach Anspruch 1, dadurch gekennzeichnet, daß die ersten Gatteraufbereitungseinrichtungen (128, 132, 134, 140) erste Summiereinrichtungen (128) zum Summieren der von den ersten und zweiten Meßfühlereinrichtungen (72, 76) gelieferten Signale und erste Teilereinrichtungen (132) zur Unterteilung des von den ersten Summiereinrichtungen (128) summierten Signals aufweisen, daß die ersten Teilereinrichtungen (132) im Betrieb ein Signal liefern, das einen ersten Schwellwertpegel darstellt, daß die zweiten Gatteraufbereitungseinrichtungen (130, 136, 138, 144) zweite Summiereinrichtungen (130) zum Summieren der von den dritten und vierten Meßfühlereinrichtungen (78, 74) gelieferten Signale und zweite Teilereinrichtungen (136) zum Teilen des von den zweiten Summiereinrichtungen (130) aufweisen, daß die zweiten Teilereinrichtungen (136) im Betrieb ein Signal liefern, das einen zweiten Schwellwertpegel darstellt.

3. Detektor nach Anspruch 1 oder 2, dadurch gekennzeichnet, daß die ersten und zweiten Gatteraufbereitungseinrichtungen jeweils weiterhin Zeitverzögerungseinrichtungen (140, 144) zur Verzögerung der Erzeugung der jeweiligen ersten und zweiten Gattersignale einschließen.

4. Detektor nach einem der vorhergehenden Ansprüche, gekennzeichnet durch den Einschluß von Meßfühleransteuereinrichtungen (100) zum Betrieb jedes der Meßfühlereinrichtungen (72, 76, 78, 74) zu gegenseitig ausschließlichen Zeiten, und von Einrichtungen (112, 114, 116, 118) zur Abtastung und zum Festhalten der Signale, die von den jeweiligen Meßfühlereinrichtungen erzeugt werden.

5. Detektor nach Anspruch 1, dadurch gekennzeichnet, daß die ersten und zweiten Gattersignale den ersten bzw. einen zweiten Schwellwertpegel darstellen, daß erste Ausgangseinrichtungen (134) vorgesehen sind, die auf die ersten Meßfühlereinrichtungen (72) und die ersten Gatteraufbereitungseinrichtungen (128, 132) ansprechen, um das Vorhandensein eines Dokumentes auf der ersten Bahn (52, 70) anzuzeigen, wenn das von den ersten Meßfühlereinrichtungen (72) erzeugte Signal nicht größer als das erste Schwellwertsignal ist, und daß zweite Ausgangseinrichtungen (138) vorgesehen sind, die auf die dritten Meßfühlereinrichtungen (78) und die zweiten Gatteraufbereitungseinrichtungen (130, 136) ansprechen, um das Vorhandensein eines Dokumentes auf der zweiten Bahn (50, 68) anzuzeigen, wenn das von den dritten Meßfühlereinrichtungen (78) erzeugte Signal nicht größer als das zweite Schwellwertsignal ist.

6. Detektor nach Anspruch 5, dadurch gekennzeichnet, daß die ersten Gatteraufbereitungseinrichtungen (128, 132) erste Summiereinrichtungen (128), die auf die ersten und zweiten Meßfühlereinrichtungen (72, 76) ansprechen, um die von den ersten und zweiten Meßfühlereinrichtungen (72, 76) erzeugten Signale zu summieren, und erste Teilereinrichtungen (132) zum Teilen des von den ersten Summiereinrichtungen (128) auf einen vorgegebenen Bruchteil aufweisen, und daß die zweiten Gatteraufbereitungseinrichtungen (130, 136) zweite Summiereinrichtungen (130), die auf die dritten und vierten Meßfühlereinrichtungen (78, 74) zur Summierung der von den dritten und vierten Meßfühlereinrichtungen (78, 74) erzeugten Signale und zweite Teilereinrichtungen (136) zum Teilen des von den zweiten Summiereinrichtungen (130) erzeugten Signals auf einen vorgegebenen Teil aufweisen.

FIG. 1

0 069 437

FIG. 2

Fig.3

Fig.4

# Fig.5

0 069 437

FIG.6